# EUROPEAN PATENT APPLICATION

(11) **EP 4 637 145 A1**
(43) Date of publication of application: **22.10.2025**
(21) Application number: 24315201.4
(22) Date of filing: 19.04.2024
(51) Int. Cl.: H04N 19/13, H04N 19/60, H04N 19/70, H04N 19/91

(54) **ENTROPY CODING OF RESIDUAL BLOCK SYNTAX ELEMENTS**

(71) Applicant: InterDigital CE Patent Holdings, SAS, 75017 Paris (FR)
(72) Inventor: Salmon-Legagneur, Charles, 35000 RENNES (FR); Le Leannec, Fabrice, 35830 BETTON (FR); Galpin, Franck, 35235 THORIGNE-FOUILLARD (FR)
(74) Representative: Rittner, Karsten

(57) **Abstract**

Systems, methods, and instrumentalities are configured for entropy coding of residual block syntax elements. In examples, a secondary prefix indication may indicate a binarization and coding method for a last significant position syntax element. The last significant position syntax element may be configured to indicate a last significant position in a transform block. The binarization and coding method for the last significant position syntax element associated with the transform block may be determined. The last significant position syntax element may be processed (e.g., encoded and/or decoded) based on the determined binarization and coding method.

## Description

### BACKGROUND

Video coding systems may be used to compress digital video signals, e.g., to reduce the storage and/or transmission bandwidth needed for such signals. Video coding systems may include, for example, block-based systems.

### SUMMARY

Systems, methods, and instrumentalities are configured for entropy coding of residual block syntax elements. In examples, a video decoding device may receive a secondary prefix indication indicating a binarization and coding method for a last significant position syntax element configured to indicate a last significant position in a transform block. The device may determine the binarization and coding method for the last significant position syntax element associated with the transform block. The device may decode the last significant position syntax element based on the determined binarization and coding method.

The secondary prefix indication may be configured to indicate whether the last significant position syntax element is associated with a size of the transform block. Based on the secondary prefix indication indicating that the last significant position syntax element is associated with the size of the transform block, the device may determining that signaling of the last significant position syntax element for the transform block is bypassed. The device may determine the size of the transform block. The device may infer the last significant position in the transform block based on the size of the transform block.

Based on the secondary prefix indication indicating that the last significant position syntax element is not associated with the size of the transform block, the device may determine that a prefix and a suffix associated with the last significant position in the transform block are signaled in video data. The device may determine the last significant position in the transform block based on the prefix and the suffix.

The secondary prefix indication may be context-based arithmetic (CABAC) coded. The secondary prefix indication may indicate whether the last significant position syntax element is associated with a width value of the transform block. Based on the secondary prefix indication indicating that the last significant position syntax element is associated with the width value of the transform block, the device may determine that the last significant position relative to the width value of the transform block is signaled in video data. The device may determine the last significant position in the transform block based on the width value and the last significant position syntax element.

The secondary prefix indication may indicate whether a range of values associated with the last significant position is below a threshold. Based on the secondary prefix indication indicating that the range of values associated with the last significant position is below the threshold, the device may determine that the last significant position relative to the width value of the transform block is signaled in video data. The device may determine the last significant position in the transform block based on the range of values associated with the last significant position.

The secondary prefix indication may indicate whether a range of values associated with the last significant position is above a threshold. Based on the secondary prefix indication indicating that the range of values associated with the last significant position is above the threshold, the device may determine that signaling of the last significant position relative to the width value of the transform block is bypassed. In examples, based on the secondary prefix indication indicating that the range of values associated with the last significant position is above the threshold, the device may determine that signaling of certain bits (e.g., some bits) of the suffix is bypassed. The device may determine the last significant position in the transform block based on the width value and the last significant position syntax element.

A video encoding device may determine a binarization and coding method for a last significant position syntax element associated with a transform block. Based on the determination, the device may include in video data a secondary prefix indication indicating the binarization and coding method for the last significant position syntax element configured to indicate a last significant position in the transform block. The device may encode the last significant position syntax element based on the determined binarization and coding method.

The secondary prefix indication may be configured to indicate whether the last significant position syntax element is associated with a size of the transform block. The device may determine the size of the transform block. The device may infer the last significant position in the transform block based on the size of the transform block. Based on the inference, the device may determine that the secondary prefix indication indicates that the last significant position syntax element is associated with the size of the transform block. Based on the secondary prefix indication indicating that the last significant position syntax element is associated with the size of the transform block, the device may determine to bypass signaling of the last significant position syntax element for the transform block.

The device may determine the last significant position in the transform block based on a prefix and a suffix. The device may determine that the last significant position syntax element indicates that the last significant position syntax element is not associated with the size of the transform block. Based on the secondary prefix indication indicating that the last significant position syntax element is not associated with the size of the transform block, the device may include the prefix and the suffix associated with the last significant position in the transform block in video data.

The secondary prefix indication may be context-based arithmetic (CABAC) coded. The secondary prefix indication may indicate whether the last significant position syntax element is associated with a width value of the transform block. The device may determine a last significant position in the transform block based on the width value and the last significant position syntax element. The device may determine that the last significant position syntax element indicates that the last significant position syntax element is associated with the width value of the transform block. The device may include the last significant position relative to the width value of the transform block in video data.

The secondary prefix indication may indicate whether a range of values associated with the last significant position is below a threshold. The device may determine the last significant position in the transform block based on the range of values associated with the last significant position. The device may determine that the secondary prefix indication indicates that the range of values associated with the last significant position is below the threshold. The device may include the last significant position relative to the width value of the transform block in video data.

The device may determine the last significant position in the transform block based on the width value and the last significant position syntax element. The device may determine that the secondary prefix indication indicates that the range of values associated with the last significant position is above the threshold. The device may determine to bypass signaling of the last significant position relative to the width value of the transform block.

### BRIEF DESCRIPTION OF THE DRAWINGS

FIG. 1A is a system diagram illustrating an example communications system in which one or more disclosed embodiments can be implemented.
FIG. 1B is a system diagram illustrating an example wireless transmit/receive unit (WTRU) that can be used within the communications system illustrated in FIG. 1A according to an embodiment.
FIG. 1C is a system diagram illustrating an example radio access network (RAN) and an example core network (CN) that can be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is a diagram illustrating an example video encoder.
FIG. 3 is a diagram illustrating an example video decoder.
FIG. 4 is a diagram illustrating an example of a system in which various aspects and examples may be implemented.
FIG. 5 illustrates an example CABAC decoding process (e.g., a reciprocal process of an example context-adaptive binary arithmetic coding (CABAC) encoding process.
FIG. 6 illustrates an example CABAC coding process from a syntax element to a binarized value of the syntax element to the context-based arithmetic coding of (e.g., some of) bins of the syntax element and an example bypass coding of (e.g., some of) bins of the syntax element.
FIG. 7 illustrates example coefficient group sizes for WxH transform blocks.
FIG. 8 illustrates an example of a reverse diagonal scan, including a coding order of coding groups in (a) 8×16 blocks, (b) 16×16 blocks (e.g., the coding order of levels in 4×4 CGs), (c) 32×16 blocks, and (d) 64×16 blocks.
FIG. 9 illustrates an example binarization for coordinates of a last significant coefficient position.
FIG. 10 illustrates an example of CABAC context indices for prefix bins of last significant coefficient position coding.
FIG. 11 illustrates an example binarization of the last significant coefficient coordinate syntax elements.
FIG. 12 illustrates an example binarization of a prefix and a suffix of last significant position syntax elements.
FIG. 13 illustrates an example distribution of last significant position X values on sequence BQTerrace QP 27.
FIG. 14 illustrates an example of a distribution of suffix values for a prefix value, for transform block size 128.
FIG. 15 illustrates an example for an example binarization of LastSigPosX/Y syntax element.
FIG. 16 illustrates an example for an example binarization of LastSigPosX/Y syntax element.
FIG. 17 illustrates an example CABAC-based dyadic signaling of a suffix value down to a pre-fixed reduced interval.
FIG. 18 illustrates an example of reducing a suffix range for a TU size (e.g., 256).
FIG. 19 illustrates an example of reducing suffix range for a suffix range or 64-127, which may concern TU sizes 64 and 128.
FIG. 20 illustrates an example for reducing the suffix range for a last significant position value between 64 and 255.

### DETAILED DESCRIPTION

A more detailed understanding can be had from the following description, given by way of example in conjunction with the accompanying drawings.

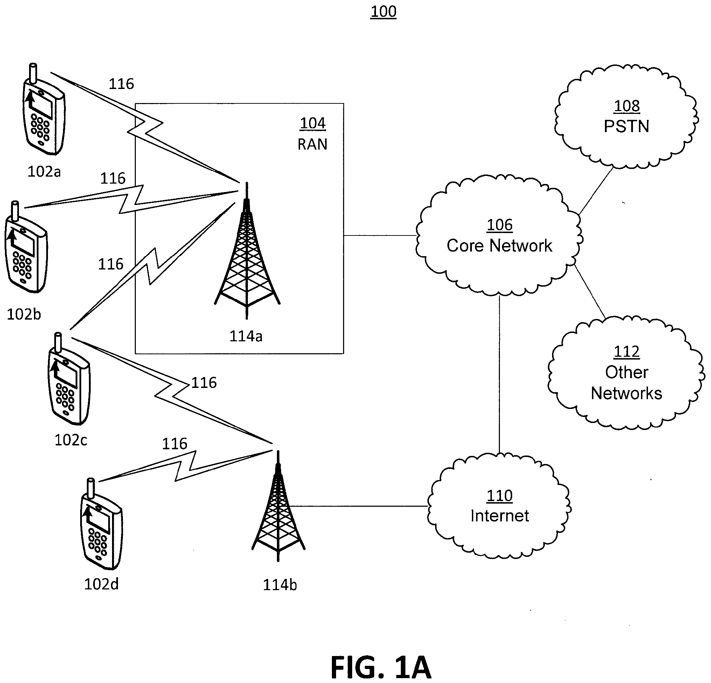

FIG. 1A is a diagram illustrating an example communications system 100 in which one or more disclosed embodiments can be implemented. The communications system 100 can be a multiple access system that provides content, such as voice, data, video, messaging, broadcast, etc., to multiple wireless users. The communications system 100 can enable multiple wireless users to access such content through the sharing of system resources, including wireless bandwidth. For example, the communications systems 100 can employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 can include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d can be any type of device configured to operate and/or communicate in a wireless environment. By way of example, the WTRUs 102a, 102b, 102c, 102d, any of which can be referred to as a "station" and/or a "STA", can be configured to transmit and/or receive wireless signals and can include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d can be interchangeably referred to as a UE.

The communications systems 100 can also include a base station 114a and/or a base station 114b. Each of the base stations 114a, 114b can be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b can be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b can include any number of interconnected base stations and/or network elements.

The base station 114a can be part of the RAN 104/113, which can also include other base stations and/or network elements (not shown), such as a base station controller (BSC), a radio network controller (RNC), relay nodes, etc. The base station 114a and/or the base station 114b can be configured to transmit and/or receive wireless signals on one or more carrier frequencies, which can be referred to as a cell (not shown). These frequencies can be in licensed spectrum, unlicensed spectrum, or a combination of licensed and unlicensed spectrum. A cell can provide coverage for a wireless service to a specific geographical area that can be relatively fixed or that can change over time. The cell can further be divided into cell sectors. For example, the cell associated with the base station 114a can be divided into three sectors. Thus, in one embodiment, the base station 114a can include three transceivers, i.e., one for each sector of the cell. In an embodiment, the base station 114a can employ multiple-input multiple output (MIMO) technology and can utilize multiple transceivers for each sector of the cell. For example, beamforming can be used to transmit and/or receive signals in desired spatial directions.

The base stations 114a, 114b can communicate with one or more of the WTRUs 102a, 102b, 102c, 102d over an air interface 116, which can be any suitable wireless communication link (e.g., radio frequency (RF), microwave, centimeter wave, micrometer wave, infrared (IR), ultraviolet (UV), visible light, etc.). The air interface 116 can be established using any suitable radio access technology (RAT).

More specifically, as noted above, the communications system 100 can be a multiple access system and can employ one or more channel access schemes, such as CDMA, TDMA, FDMA, OFDMA, SC-FDMA, and the like. For example, the base station 114a in the RAN 104/113 and the WTRUs 102a, 102b, 102c can implement a radio technology such as Universal Mobile Telecommunications System (UMTS) Terrestrial Radio Access (UTRA), which can establish the air interface 115/116/117 using wideband CDMA (WCDMA). WCDMA can include communication protocols such as High-Speed Packet Access (HSPA) and/or Evolved HSPA (HSPA+). HSPA can include High-Speed Downlink (DL) Packet Access (HSDPA) and/or High-Speed UL Packet Access (HSUPA).

In an embodiment, the base station 114a and the WTRUs 102a, 102b, 102c can implement a radio technology such as Evolved UMTS Terrestrial Radio Access (E-UTRA), which can establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c can implement a radio technology such as NR Radio Access, which can establish the air interface 116 using New Radio (NR).

In an embodiment, the base station 114a and the WTRUs 102a, 102b, 102c can implement multiple radio access technologies. For example, the base station 114a and the WTRUs 102a, 102b, 102c can implement LTE radio access and NR radio access together, for instance using dual connectivity (DC) principles. Thus, the air interface utilized by WTRUs 102a, 102b, 102c can be characterized by multiple types of radio access technologies and/or transmissions sent to/from multiple types of base stations (e.g., a eNB and a gNB).

In other embodiments, the base station 114a and the WTRUs 102a, 102b, 102c can implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A can be a wireless router, Home Node B, Home eNode B, or access point, for example, and can utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d can implement a radio technology such as IEEE 802.11 to establish a wireless local area network (WLAN). In an embodiment, the base station 114b and the WTRUs 102c, 102d can implement a radio technology such as IEEE 802.15 to establish a wireless personal area network (WPAN). In yet another embodiment, the base station 114b and the WTRUs 102c, 102d can utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b can have a direct connection to the Internet 110. Thus, the base station 114b can not be required to access the Internet 110 via the CN 106/115.

The RAN 104/113 can be in communication with the CN 106/115, which can be any type of network configured to provide voice, data, applications, and/or voice over internet protocol (VoIP) services to one or more of the WTRUs 102a, 102b, 102c, 102d. The data can have varying quality of service (QoS) requirements, such as differing throughput requirements, latency requirements, error tolerance requirements, reliability requirements, data throughput requirements, mobility requirements, and the like. The CN 106/115 can provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 can be in direct or indirect communication with other RANs that employ the same RAT as the RAN 104/113 or a different RAT. For example, in addition to being connected to the RAN 104/113, which can be utilizing a NR radio technology, the CN 106/115 can also be in communication with another RAN (not shown) employing a GSM, UMTS, CDMA 2000, WiMAX, E-UTRA, or WiFi radio technology.

The CN 106/115 can also serve as a gateway for the WTRUs 102a, 102b, 102c, 102d to access the PSTN 108, the Internet 110, and/or the other networks 112. The PSTN 108 can include circuit-switched telephone networks that provide plain old telephone service (POTS). The Internet 110 can include a global system of interconnected computer networks and devices that use common communication protocols, such as the transmission control protocol (TCP), user datagram protocol (UDP) and/or the internet protocol (IP) in the TCP/IP internet protocol suite. The networks 112 can include wired and/or wireless communications networks owned and/or operated by other service providers. For example, the networks 112 can include another CN connected to one or more RANs, which can employ the same RAT as the RAN 104/113 or a different RAT.

Some or all of the WTRUs 102a, 102b, 102c, 102d in the communications system 100 can include multi-mode capabilities (e.g., the WTRUs 102a, 102b, 102c, 102d can include multiple transceivers for communicating with different wireless networks over different wireless links). For example, the WTRU 102c shown in FIG. 1A can be configured to communicate with the base station 114a, which can employ a cellular-based radio technology, and with the base station 114b, which can employ an IEEE 802 radio technology.

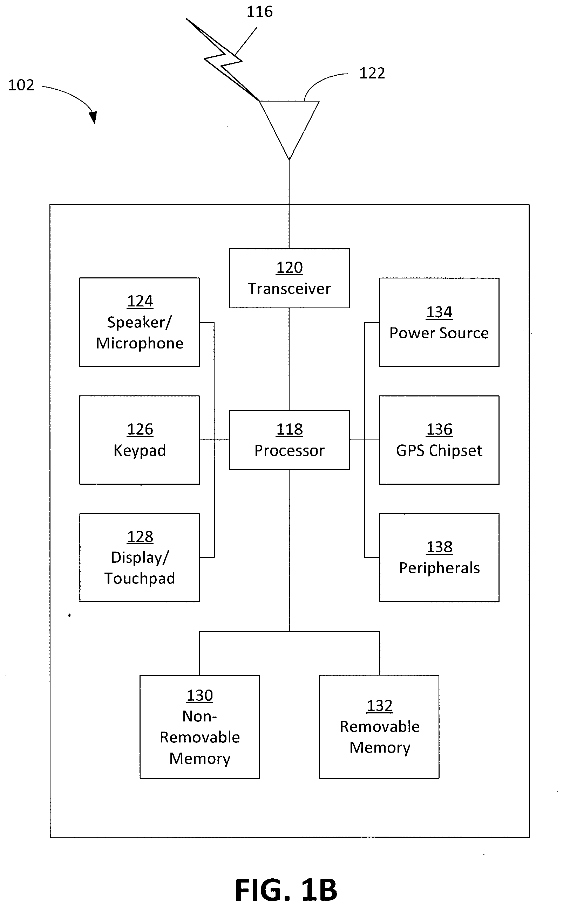

FIG. 1B is a system diagram illustrating an example WTRU 102. As shown in FIG. 1B, the WTRU 102 can include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 can include any sub-combination of the foregoing elements while remaining consistent with an embodiment.

The processor 118 can be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 can perform signal coding, data processing, power control, input/output processing, and/or any other functionality that enables the WTRU 102 to operate in a wireless environment. The processor 118 can be coupled to the transceiver 120, which can be coupled to the transmit/receive element 122. While FIG. 1B depicts the processor 118 and the transceiver 120 as separate components, it will be appreciated that the processor 118 and the transceiver 120 can be integrated together in an electronic package or chip.

The transmit/receive element 122 can be configured to transmit signals to, or receive signals from, a base station (e.g., the base station 114a) over the air interface 116. For example, in one embodiment, the transmit/receive element 122 can be an antenna configured to transmit and/or receive RF signals. In an embodiment, the transmit/receive element 122 can be an emitter/detector configured to transmit and/or receive IR, UV, or visible light signals, for example. In yet another embodiment, the transmit/receive element 122 can be configured to transmit and/or receive both RF and light signals. It will be appreciated that the transmit/receive element 122 can be configured to transmit and/or receive any combination of wireless signals.

Although the transmit/receive element 122 is depicted in FIG. 1B as a single element, the WTRU 102 can include any number of transmit/receive elements 122. More specifically, the WTRU 102 can employ MIMO technology. Thus, in one embodiment, the WTRU 102 can include two or more transmit/receive elements 122 (e.g., multiple antennas) for transmitting and receiving wireless signals over the air interface 116.

The transceiver 120 can be configured to modulate the signals that are to be transmitted by the transmit/receive element 122 and to demodulate the signals that are received by the transmit/receive element 122. As noted above, the WTRU 102 can have multi-mode capabilities. Thus, the transceiver 120 can include multiple transceivers for enabling the WTRU 102 to communicate via multiple RATs, such as NR and IEEE 802.11, for example.

The processor 118 of the WTRU 102 can be coupled to, and can receive user input data from, the speaker/microphone 124, the keypad 126, and/or the display/touchpad 128 (e.g., a liquid crystal display (LCD) display unit or organic light-emitting diode (OLED) display unit). The processor 118 can also output user data to the speaker/microphone 124, the keypad 126, and/or the display/touchpad 128. In addition, the processor 118 can access information from, and store data in, any type of suitable memory, such as the non-removable memory 130 and/or the removable memory 132. The non-removable memory 130 can include random-access memory (RAM), read-only memory (ROM), a hard disk, or any other type of memory storage device. The removable memory 132 can include a subscriber identity module (SIM) card, a memory stick, a secure digital (SD) memory card, and the like. In other embodiments, the processor 118 can access information from, and store data in, memory that is not physically located on the WTRU 102, such as on a server or a home computer (not shown).

The processor 118 can receive power from the power source 134, and can be configured to distribute and/or control the power to the other components in the WTRU 102. The power source 134 can be any suitable device for powering the WTRU 102. For example, the power source 134 can include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 can also be coupled to the GPS chipset 136, which can be configured to provide location information (e.g., longitude and latitude) regarding the current location of the WTRU 102. In addition to, or in lieu of, the information from the GPS chipset 136, the WTRU 102 can receive location information over the air interface 116 from a base station (e.g., base stations 114a, 114b) and/or determine its location based on the timing of the signals being received from two or more nearby base stations. It will be appreciated that the WTRU 102 can acquire location information by way of any suitable location-determination method while remaining consistent with an embodiment.

The processor 118 can further be coupled to other peripherals 138, which can include one or more software and/or hardware modules that provide additional features, functionality and/or wired or wireless connectivity. For example, the peripherals 138 can include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 can include one or more sensors, the sensors can be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 can include a full duplex radio for which transmission and reception of some or all of the signals (e.g., associated with particular subframes for both the UL (e.g., for transmission) and downlink (e.g., for reception) can be concurrent and/or simultaneous. The full duplex radio can include an interference management unit to reduce and or substantially eliminate self-interference via either hardware (e.g., a choke) or signal processing via a processor (e.g., a separate processor (not shown) or via processor 118). In an embodiment, the WTRU 102 can include a half-duplex radio for which transmission and reception of some or all of the signals (e.g., associated with particular subframes for either the UL (e.g., for transmission) or the downlink (e.g., for reception)).

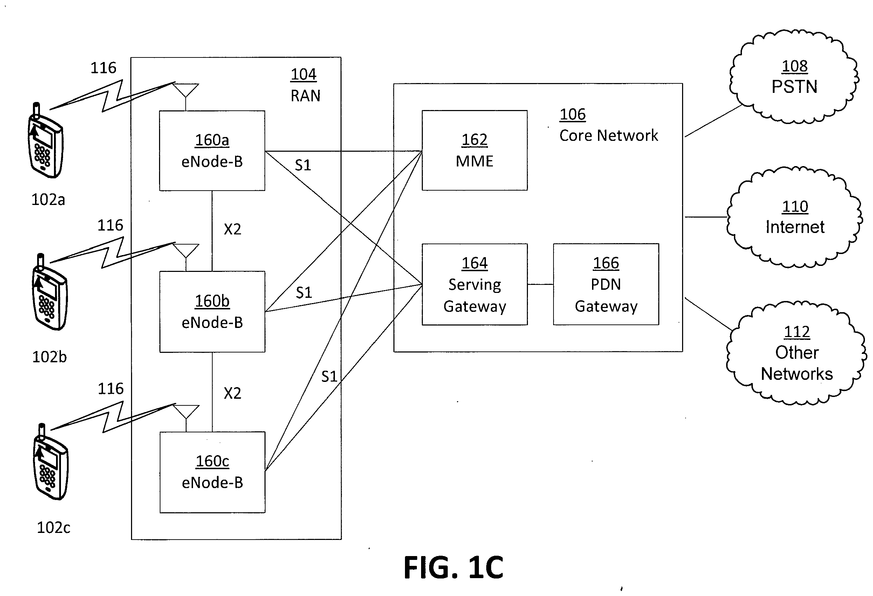

FIG. 1C is a system diagram illustrating the RAN 104 and the CN 106 according to an embodiment. As noted above, the RAN 104 can employ an E-UTRA radio technology to communicate with the WTRUs 102a, 102b, 102c over the air interface 116. The RAN 104 can also be in communication with the CN 106.

The RAN 104 can include eNode-Bs 160a, 160b, 160c, though it will be appreciated that the RAN 104 can include any number of eNode-Bs while remaining consistent with an embodiment. The eNode-Bs 160a, 160b, 160c can each include one or more transceivers for communicating with the WTRUs 102a, 102b, 102c over the air interface 116. In one embodiment, the eNode-Bs 160a, 160b, 160c can implement MIMO technology. Thus, the eNode-B 160a, for example, can use multiple antennas to transmit wireless signals to, and/or receive wireless signals from, the WTRU 102a.

Each of the eNode-Bs 160a, 160b, 160c can be associated with a particular cell (not shown) and can be configured to handle radio resource management decisions, handover decisions, scheduling of users in the UL and/or DL, and the like. As shown in FIG. 1C, the eNode-Bs 160a, 160b, 160c can communicate with one another over an X2 interface.

The CN 106 shown in FIG. 1C can include a mobility management entity (MME) 162, a serving gateway (SGW) 164, and a packet data network (PDN) gateway (or PGW) 166. While each of the foregoing elements are depicted as part of the CN 106, it will be appreciated that any of these elements can be owned and/or operated by an entity other than the CN operator.

The MME 162 can be connected to each of the eNode-Bs 162a, 162b, 162c in the RAN 104 via an S1 interface and can serve as a control node. For example, the MME 162 can be responsible for authenticating users of the WTRUs 102a, 102b, 102c, bearer activation/deactivation, selecting a particular serving gateway during an initial attach of the WTRUs 102a, 102b, 102c, and the like. The MME 162 can provide a control plane function for switching between the RAN 104 and other RANs (not shown) that employ other radio technologies, such as GSM and/or WCDMA.

The SGW 164 can be connected to each of the eNode Bs 160a, 160b, 160c in the RAN 104 via the S1 interface. The SGW 164 can generally route and forward user data packets to/from the WTRUs 102a, 102b, 102c. The SGW 164 can perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 can be connected to the PGW 166, which can provide the WTRUs 102a, 102b, 102c with access to packet-switched networks, such as the Internet 110, to facilitate communications between the WTRUs 102a, 102b, 102c and IP-enabled devices.

The CN 106 can facilitate communications with other networks. For example, the CN 106 can provide the WTRUs 102a, 102b, 102c with access to circuit-switched networks, such as the PSTN 108, to facilitate communications between the WTRUs 102a, 102b, 102c and traditional land-line communications devices. For example, the CN 106 can include, or can communicate with, an IP gateway (e.g., an IP multimedia subsystem (IMS) server) that serves as an interface between the CN 106 and the PSTN 108. In addition, the CN 106 can provide the WTRUs 102a, 102b, 102c with access to the other networks 112, which can include other wired and/or wireless networks that are owned and/or operated by other service providers.

Although the WTRU is described in FIGS. 1A-1D as a wireless terminal, it is contemplated that in certain representative embodiments that such a terminal can use (e.g., temporarily or permanently) wired communication interfaces with the communication network.

In representative embodiments, the other network 112 can be a WLAN.

A WLAN in Infrastructure Basic Service Set (BSS) mode can have an Access Point (AP) for the BSS and one or more stations (STAs) associated with the AP. The AP can have an access or an interface to a Distribution System (DS) or another type of wired/wireless network that carries traffic in to and/or out of the BSS. Traffic to STAs that originates from outside the BSS can arrive through the AP and can be delivered to the STAs. Traffic originating from STAs to destinations outside the BSS can be sent to the AP to be delivered to respective destinations. Traffic between STAs within the BSS can be sent through the AP, for example, where the source STA can send traffic to the AP and the AP can deliver the traffic to the destination STA. The traffic between STAs within a BSS can be considered and/or referred to as peer-to-peer traffic. The peer-to-peer traffic can be sent between (e.g., directly between) the source and destination STAs with a direct link setup (DLS). In certain representative embodiments, the DLS can use an 802.11e DLS or an 802.11z tunneled DLS (TDLS). A WLAN using an Independent BSS (IBSS) mode cannot have an AP, and the STAs (e.g., all of the STAs) within or using the IBSS can communicate directly with each other. The IBSS mode of communication can sometimes be referred to herein as an "ad-hoc" mode of communication.

When using the 802.11 ac infrastructure mode of operation or a similar mode of operations, the AP can transmit a beacon on a fixed channel, such as a primary channel. The primary channel can be a fixed width (e.g., 20 MHz wide bandwidth) or a dynamically set width via signaling. The primary channel can be the operating channel of the BSS and can be used by the STAs to establish a connection with the AP. In certain representative embodiments, Carrier Sense Multiple Access with Collision Avoidance (CSMA/CA) can be implemented, for example in in 802.11 systems. For CSMA/CA, the STAs (e.g., every STA), including the AP, can sense the primary channel. If the primary channel is sensed/detected and/or determined to be busy by a particular STA, the particular STA can back off. One STA (e.g., only one station) can transmit at any given time in a given BSS.

High Throughput (HT) STAs can use a 40 MHz wide channel for communication, for example, via a combination of the primary 20 MHz channel with an adjacent or nonadjacent 20 MHz channel to form a 40 MHz wide channel.

Very High Throughput (VHT) STAs can support 20MHz, 40 MHz, 80 MHz, and/or 160 MHz wide channels. The 40 MHz, and/or 80 MHz, channels can be formed by combining contiguous 20 MHz channels. A 160 MHz channel can be formed by combining 8 contiguous 20 MHz channels, or by combining two non-contiguous 80 MHz channels, which can be referred to as an 80+80 configuration. For the 80+80 configuration, the data, after channel encoding, can be passed through a segment parser that can divide the data into two streams. Inverse Fast Fourier Transform (IFFT) processing, and time domain processing, can be done on each stream separately. The streams can be mapped on to the two 80 MHz channels, and the data can be transmitted by a transmitting STA. At the receiver of the receiving STA, the above described operation for the 80+80 configuration can be reversed, and the combined data can be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah can support Meter Type Control/Machine-Type Communications, such as MTC devices in a macro coverage area. MTC devices can have certain capabilities, for example, limited capabilities including support for (e.g., only support for) certain and/or limited bandwidths. The MTC devices can include a battery with a battery life above a threshold (e.g., to maintain a very long battery life).

WLAN systems, which can support multiple channels, and channel bandwidths, such as 802.11n, 802.11ac, 802.11af, and 802.11ah, include a channel which can be designated as the primary channel. The primary channel can have a bandwidth equal to the largest common operating bandwidth supported by all STAs in the BSS. The bandwidth of the primary channel can be set and/or limited by a STA, from among all STAs in operating in a BSS, which supports the smallest bandwidth operating mode. In the example of 802.11ah, the primary channel can be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings can depend on the status of the primary channel. If the primary channel is busy, for example, due to a STA (which supports only a 1 MHz operating mode), transmitting to the AP, the entire available frequency bands can be considered busy even though a majority of the frequency bands remains idle and can be available.

In the United States, the available frequency bands, which can be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

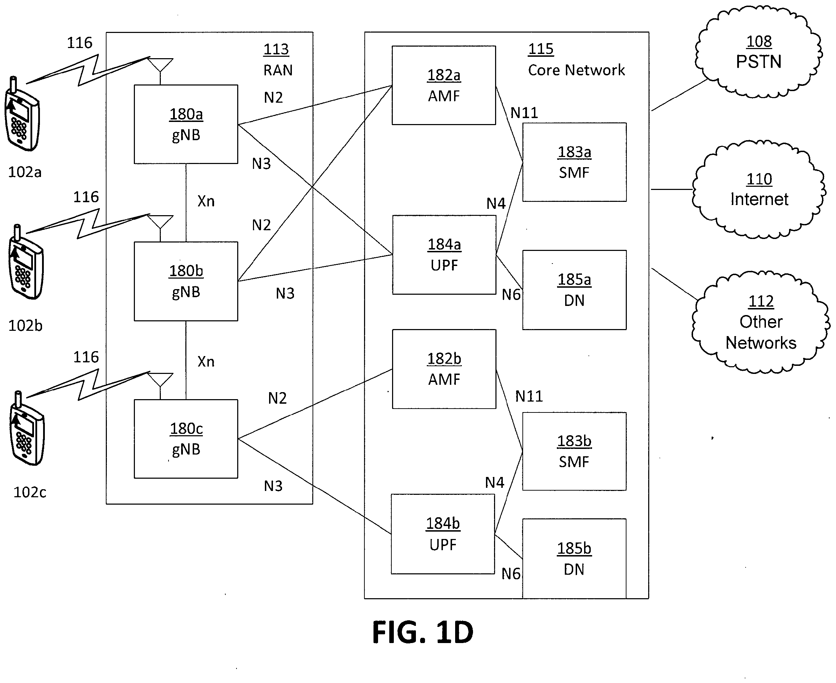

FIG. 1D is a system diagram illustrating the RAN 113 and the CN 115 according to an embodiment. As noted above, the RAN 113 can employ an NR radio technology to communicate with the WTRUs 102a, 102b, 102c over the air interface 116. The RAN 113 can also be in communication with the CN 115.

The RAN 113 can include gNBs 180a, 180b, 180c, though it will be appreciated that the RAN 113 can include any number of gNBs while remaining consistent with an embodiment. The gNBs 180a, 180b, 180c can each include one or more transceivers for communicating with the WTRUs 102a, 102b, 102c over the air interface 116. In one embodiment, the gNBs 180a, 180b, 180c can implement MIMO technology. For example, gNBs 180a, 108b can utilize beamforming to transmit signals to and/or receive signals from the gNBs 180a, 180b, 180c. Thus, the gNB 180a, for example, can use multiple antennas to transmit wireless signals to, and/or receive wireless signals from, the WTRU 102a. In an embodiment, the gNBs 180a, 180b, 180c can implement carrier aggregation technology. For example, the gNB 180a can transmit multiple component carriers to the WTRU 102a (not shown). A subset of these component carriers can be on unlicensed spectrum while the remaining component carriers can be on licensed spectrum. In an embodiment, the gNBs 180a, 180b, 180c can implement Coordinated Multi-Point (CoMP) technology. For example, WTRU 102a can receive coordinated transmissions from gNB 180a and gNB 180b (and/or gNB 180c).

The WTRUs 102a, 102b, 102c can communicate with gNBs 180a, 180b, 180c using transmissions associated with a scalable numerology. For example, the OFDM symbol spacing and/or OFDM subcarrier spacing can vary for different transmissions, different cells, and/or different portions of the wireless transmission spectrum. The WTRUs 102a, 102b, 102c can communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c can be configured to communicate with the WTRUs 102a, 102b, 102c in a standalone configuration and/or a non-standalone configuration. In the standalone configuration, WTRUs 102a, 102b, 102c can communicate with gNBs 180a, 180b, 180c without also accessing other RANs (e.g., such as eNode-Bs 160a, 160b, 160c). In the standalone configuration, WTRUs 102a, 102b, 102c can utilize one or more of gNBs 180a, 180b, 180c as a mobility anchor point. In the standalone configuration, WTRUs 102a, 102b, 102c can communicate with gNBs 180a, 180b, 180c using signals in an unlicensed band. In a non-standalone configuration WTRUs 102a, 102b, 102c can communicate with/connect to gNBs 180a, 180b, 180c while also communicating with/connecting to another RAN such as eNode-Bs 160a, 160b, 160c. For example, WTRUs 102a, 102b, 102c can implement DC principles to communicate with one or more gNBs 180a, 180b, 180c and one or more eNode-Bs 160a, 160b, 160c substantially simultaneously. In the non-standalone configuration, eNode-Bs 160a, 160b, 160c can serve as a mobility anchor for WTRUs 102a, 102b, 102c and gNBs 180a, 180b, 180c can provide additional coverage and/or throughput for servicing WTRUs 102a, 102b, 102c.

Each of the gNBs 180a, 180b, 180c can be associated with a particular cell (not shown) and can be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c can communicate with one another over an Xn interface.

The CN 115 shown in FIG. 1D can include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements can be owned and/or operated by an entity other than the CN operator.

The AMF 182a, 182b can be connected to one or more of the gNBs 180a, 180b, 180c in the RAN 113 via an N2 interface and can serve as a control node. For example, the AMF 182a, 182b can be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing can be used by the AMF 182a, 182b in order to customize CN support for WTRUs 102a, 102b, 102c based on the types of services being utilized WTRUs 102a, 102b, 102c. For example, different network slices can be established for different use cases such as services relying on ultra-reliable low latency (URLLC) access, services relying on enhanced massive mobile broadband (eMBB) access, services for machine type communication (MTC) access, and/or the like. The AMF 162 can provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b can be connected to an AMF 182a, 182b in the CN 115 via an N11 interface. The SMF 183a, 183b can also be connected to a UPF 184a, 184b in the CN 115 via an N4 interface. The SMF 183a, 183b can select and control the UPF 184a, 184b and configure the routing of traffic through the UPF 184a, 184b. The SMF 183a, 183b can perform other functions, such as managing and allocating UE IP address, managing PDU sessions, controlling policy enforcement and QoS, providing downlink data notifications, and the like. A PDU session type can be IP-based, non-IP based, Ethernet-based, and the like.

The UPF 184a, 184b can be connected to one or more of the gNBs 180a, 180b, 180c in the RAN 113 via an N3 interface, which can provide the WTRUs 102a, 102b, 102c with access to packet-switched networks, such as the Internet 110, to facilitate communications between the WTRUs 102a, 102b, 102c and IP-enabled devices. The UPF 184, 184b can perform other functions, such as routing and forwarding packets, enforcing user plane policies, supporting multi-homed PDU sessions, handling user plane QoS, buffering downlink packets, providing mobility anchoring, and the like.

The CN 115 can facilitate communications with other networks. For example, the CN 115 can include, or can communicate with, an IP gateway (e.g., an IP multimedia subsystem (IMS) server) that serves as an interface between the CN 115 and the PSTN 108. In addition, the CN 115 can provide the WTRUs 102a, 102b, 102c with access to the other networks 112, which can include other wired and/or wireless networks that are owned and/or operated by other service providers. In one embodiment, the WTRUs 102a, 102b, 102c can be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, can be performed by one or more emulation devices (not shown). The emulation devices can be one or more devices configured to emulate one or more, or all, of the functions described herein. For example, the emulation devices can be used to test other devices and/or to simulate network and/or WTRU functions.

The emulation devices can be designed to implement one or more tests of other devices in a lab environment and/or in an operator network environment. For example, the one or more emulation devices can perform the one or more, or all, functions while being fully or partially implemented and/or deployed as part of a wired and/or wireless communication network in order to test other devices within the communication network. The one or more emulation devices can perform the one or more, or all, functions while being temporarily implemented/deployed as part of a wired and/or wireless communication network. The emulation device can be directly coupled to another device for purposes of testing and/or can performing testing using over-the-air wireless communications.

The one or more emulation devices can perform the one or more, including all, functions while not being implemented/deployed as part of a wired and/or wireless communication network. For example, the emulation devices can be utilized in a testing scenario in a testing laboratory and/or a non-deployed (e.g., testing) wired and/or wireless communication network in order to implement testing of one or more components. The one or more emulation devices can be test equipment. Direct RF coupling and/or wireless communications via RF circuitry (e.g., which can include one or more antennas) can be used by the emulation devices to transmit and/or receive data.

This application describes a variety of aspects, including tools, features, examples, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. The figures provided herein can provide some examples, but other examples are contemplated. The discussion of the figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable medium (e.g., storage medium) comprising (e.g., having stored thereon) instructions for encoding or decoding video data according to any of the methods described, and/or a computer readable storage medium having stored thereon a bitstream generated according to any of the methods described. When referred to herein, a bitstream can refer to transmitted data, but can also refer to data that is stored, generated, and/or accessed without being transmitted (e.g., non-transitory data).

In the present application, the terms "reconstructed" and "decoded" can be used interchangeably, the terms "pixel" and "sample" can be used interchangeably, the terms "image," "picture" and "frame" can be used interchangeably.

Various methods are described herein, and each of the methods comprises one or more steps or actions for achieving the described method. Unless a specific order of steps or actions is required for proper operation of the method, the order and/or use of specific steps and/or actions can be modified or combined. Additionally, terms such as "first", "second", etc. can be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and can occur, for example, before, during, or in an overlapping time period with the second decoding.

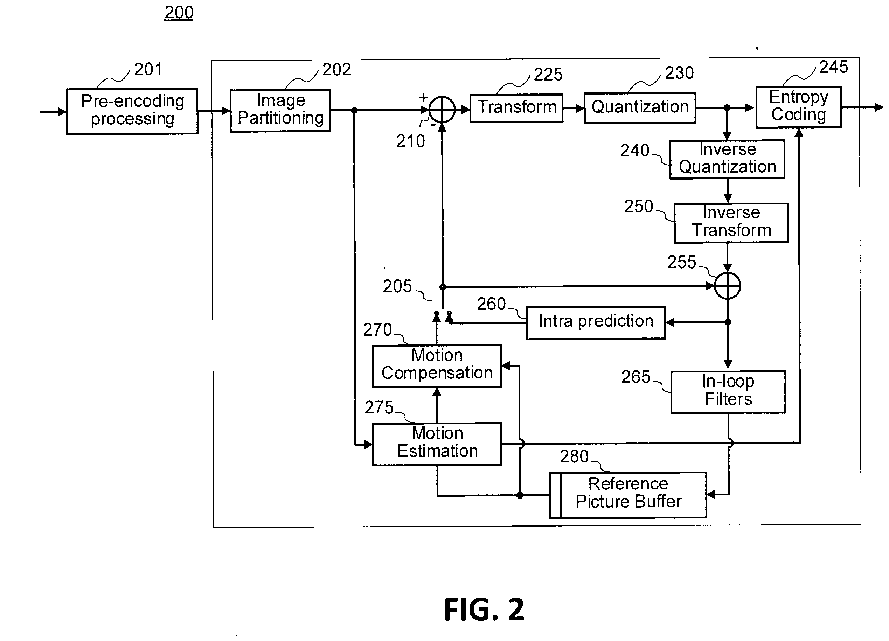

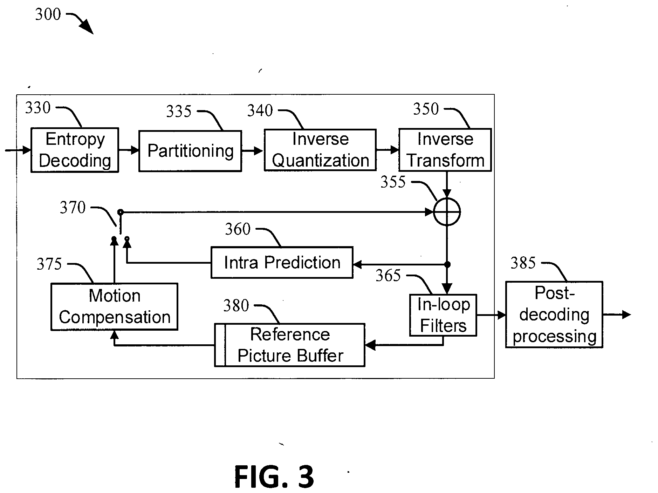

Various methods and other aspects described in this application can be used to modify modules, for example, decoding modules, of a video encoder 200 and decoder 300 as shown in FIG. 2 and FIG. 3. Moreover, the subject matter disclosed herein can be applied, for example, to any type, format or version of video coding, whether described in a standard or a recommendation, whether pre-existing or future-developed, and extensions of any such standards and recommendations. Unless indicated otherwise, or technically precluded, the aspects described in this application can be used individually or in combination.

Various numeric values are used in examples described in the present application. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence can go through pre-encoding processing 201, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 200, a picture is encoded by the encoder elements as described below. The picture to be encoded is partitioned 202 and processed in units of, for example, coding units (CUs). Each unit is encoded using, for example, either an intra or inter mode. When a unit is encoded in an intra mode, it performs intra prediction 260. In an inter mode, motion estimation 275 and compensation 270 are performed. The encoder decides 205 which one of the intra mode or inter mode to use for encoding the unit, and indicates the intra/inter decision by, for example, a prediction mode flag. Prediction residuals are calculated, for example, by subtracting 210 the predicted block from the original image block.

The prediction residuals are then transformed 225 and quantized 230. The quantized transform coefficients, as well as motion vectors and other syntax elements, are entropy coded 245 to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized 240 and inverse transformed 250 to decode prediction residuals. Combining 255 the decoded prediction residuals and the predicted block, an image block is reconstructed. In-loop filters 265 are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded 330 to obtain transform coefficients, motion vectors, and other coded information. The picture partition information indicates how the picture is partitioned. The decoder can therefore divide 335 the picture according to the decoded picture partitioning information. The transform coefficients are de-quantized 340 and inverse transformed 350 to decode the prediction residuals. Combining 355 the decoded prediction residuals and the predicted block, an image block is reconstructed. The predicted block can be obtained 370 from intra prediction 360 or motion-compensated prediction (i.e., inter prediction) 375. In-loop filters 365 are applied to the reconstructed image. The filtered image is stored at a reference picture buffer 380.

The decoded picture can further go through post-decoding processing 385, for example, an inverse color transform (e.g., conversion from YCbCr 4:2:0 to RGB 4:4:4) or an inverse remapping performing the inverse of the remapping process performed in the pre-encoding processing 201. The post-decoding processing can use metadata derived in the pre-encoding processing and signaled in the bitstream. In an example, the decoded images (e.g., after application of the in-loop filters 365 and/or after post-decoding processing 385, if post-decoding processing is used) can be sent to a display device for rendering to a user.

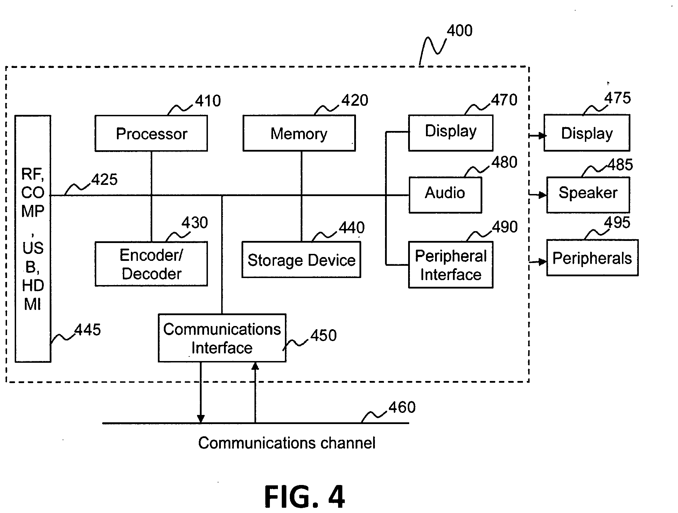

FIG. 4 is a diagram showing an example of a system in which various aspects and examples described herein can be implemented. System 400 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, can be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that can be included in a device to perform the encoding and/or decoding functions. As is known, a device can include one or both of the encoding and decoding modules. Additionally, encoder/decoder module 430 can be implemented as a separate element of system 400 or can be incorporated within processor 410 as a combination of hardware and software as known to those skilled in the art.

Program code to be loaded onto processor 410 or encoder/decoder 430 to perform the various aspects described in this document can be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device can be either the processor 410 or the encoder/decoder module 430) is used for one or more of these functions. The external memory can be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 can be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 4, include composite video.

In various examples, the input devices of block 445 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, can be implemented, for example, within a separate input processing IC or within processor 410 as necessary. Similarly, aspects of USB or HDMI interface processing can be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output . device.

Various elements of system 400 can be provided within an integrated housing, Within the integrated housing, the various elements can be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 can be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth^{®} network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 can be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices can be communicatively coupled to system 400 via dedicated connections through respective interfaces 470, 480, and 490. Alternatively, the output devices can be connected to system 400 using the communications channel 460 via the communications interface 450. The display 475 and speakers 485 can be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal can be provided via dedicated output connections, including, for example, HDMI ports, USB ports, or COMP outputs.

The examples can be carried out by computer software implemented by the processor 410 or by hardware, or by a combination of hardware and software. As a non-limiting example, the examples can be implemented by one or more integrated circuits. The memory 420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 410 can be of any type appropriate to the technical environment, and can encompass one or more of microprocessors, general purpose computers, special purpose computers, and processors based on a multi-core architecture, as non-limiting examples.

Various implementations include decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder, such as receiving a secondary prefix indication indicating a binarization and coding method for a last significant position syntax element configured to indicate a last significant position in a transform block; determining the binarization and coding method for the last significant position syntax element associated with the transform block; and decoding the last significant position syntax element based on the determined binarization and coding method.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations include encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder, such as determining a binarization and coding method for a last significant position syntax element associated with a transform block; based on the determination, including in video data a secondary prefix indication indicating the binarization and coding method for the last significant position syntax element configured to indicate a last significant position in the transform block; and encoding the last significant position syntax element based on the determined binarization and coding method.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application can refer to "determining" various pieces of information. Determining the information can include one or more of, for example, estimating the information, calculating the information, predicting the information, or retrieving the information from memory. Obtaining can include receiving, retrieving, constructing, generating, and/or determining.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various examples. It is to be appreciated that signaling can be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described example. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on, or accessed or received from, a processor-readable medium.

Many examples are described herein. Features of examples can be provided alone or in any combination, across various claim categories and types. Further, examples can include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions (e.g., computer-readable medium), medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

Features described herein may be associated with residual block entropy coding. A syntax element decoding process may be associated with Context-Adaptive Binary Arithmetic Coding (CABAC). An example internal CABAC decoding process is described herein.

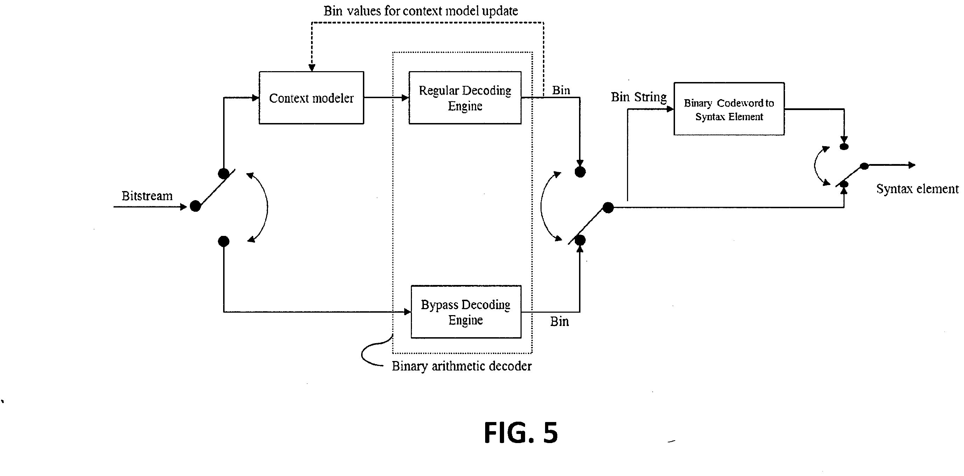

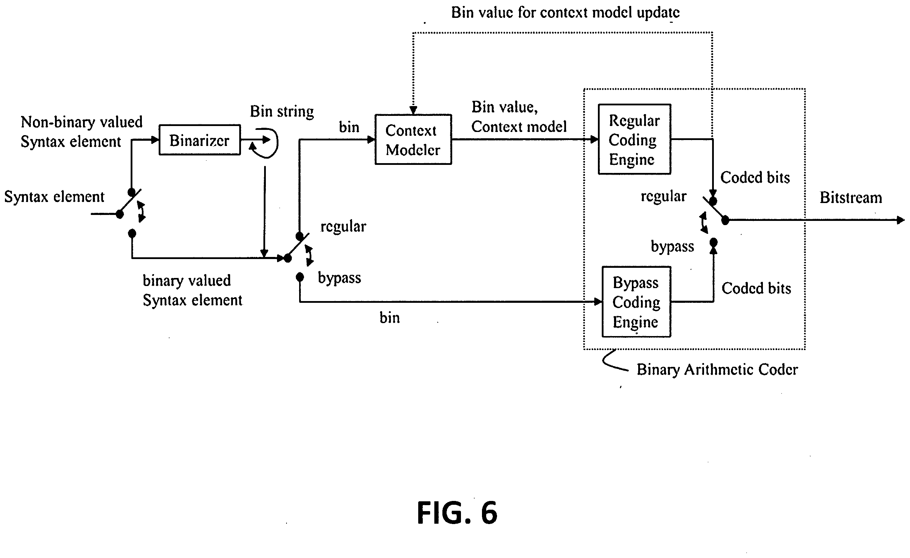

FIG. 5 illustrates a CABAC decoding process of a syntax element given the input coded bit-stream. The CABAC decoding process may be a reciprocal process of the syntax element coding process of FIG. 6, for example.

The input to the process of FIG. 5 may be included in a coded bitstream. At any point of the decoding process, the decoder may know which syntax element is to be decoded next. Which syntax element is to be decoded next may be specified in bitstream syntax and the decoding process. It may be known how a syntax element to be decoded is binarized (e.g., represented as a sequence of binary symbols called bins, equal to '1' or '0') and how a bin of the bin string has been encoded.

The first stage of the CABAC decoding process (left side of FIG. 5) may include decoding a series of bins. For a bin, whether the series of bins have been encoded according to the bypass mode or the regular mode may be determined. The bypass mode may include reading a bit in the bit-stream and assigning the so-obtained bit value to bin. The mode may be efficient and used for bins that have a uniform statistical distribution, e.g., an equal probability of being equal to '1' or '0'.

If a bin is coded in bypass mode, the bin may (e.g., or may not) have been coded in CABAC. In CABAC, the decoding of a considered bin may include the following. A context may be obtained for the decoding of a bin. The context may be given by the context modeler module shown on FIG. 5. The goal of the context may be obtain the conditional probability that current bin has value '0', given prior context or information *X.* The prior *X* may be the value of an already decoded syntax element and may be available on the encoder and decoder side in a synchronous way, at the time the bin is being decoded.

The prior *X* used for the decoding of a bin may be specified and may be chosen because it is statistically correlated with the current bin to decode. The contextual information may be used because the contextual information reduces the rate cost of coding the bin. The conditional entropy of the bin given *X* may be low (e.g., lower) as the bin and *X* are correlated. The following relationship may be associated with information theory: $H \left(bin| X\right) < H \left(bin\right)$

The conditional entropy of *bin* knowing *X* may be lower than the entropy of *bin* if *bin* and *X* are statistically correlated. The contextual information *X* may be used to obtain the probability of bin being '0' or'1'. Given the conditional probabilities, the decoding engine of FIG. 5 may perform the arithmetic decoding of the binary value *bin.* The value of *bin* may be used to update the value of the conditional probabilities associated to current bin, knowing the current contextual information X. The context model updating step may be depicted, for example, in FIG. 5. Updating the context model for a bin as long as the bins are being decoded (or coded) may allow for progressively refining the context modeling for a binary element. The CABAC decoder may progressively learn the statistical behavior of a regular-encoded bin.

The context modeler and the context model updating steps may be identical operations on the encoder and on the decoder sides. The arithmetic decoding of a bin or its bypass decoding, depending on how the bin was coded may lead to a series of decoded bins.

The (e.g., second) phase of the CABAC decoding, shown on right side of FIG. 5, may include converting the series of binary symbols into higher level syntax elements. A syntax element may take the form of an indication, in which case, the syntax element may take the value of decoded bins. If the binarization of a syntax element corresponds to a set of several bins according to considered standard specification, conversion steps (e.g., "Binary Codeword to Syntax Element") on FIG. 5, may take place.

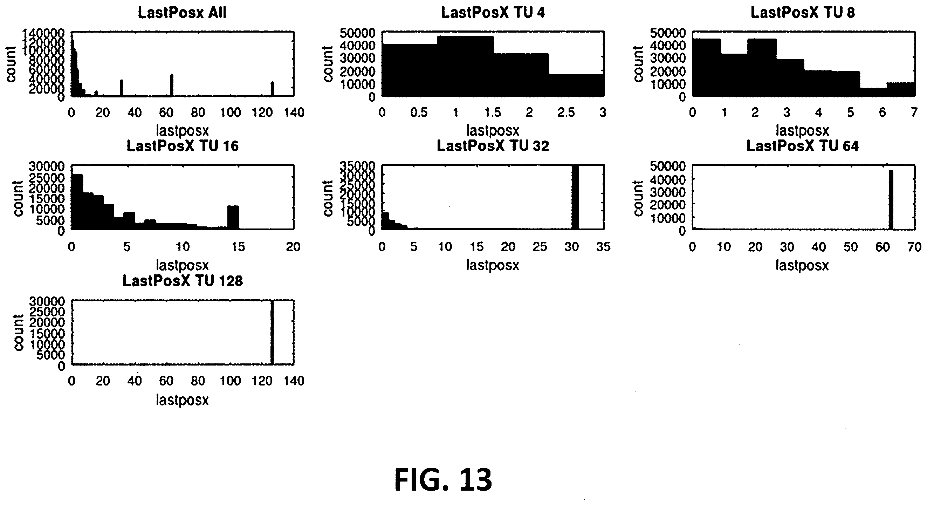

The conversion steps may proceed the reciprocal of the binarization step that was done by the encoder. For example, FIG. 13 illustrates an example binarization of the syntax elements *last_sig_coeff_x_prefix* , *last_sig_coeff_y_prefix* , *last_sig_coeff_x_suffix* , and *last_sig_coeff_y_suffix.* The inverse conversion performed may include obtaining the value of these syntax elements based on their respective decoded binarized versions.

FIG. 6 illustrates an example CABAC coding process from a syntax element to a binarized value of the syntax element to the context-based arithmetic coding of (e.g., some of) bins of the syntax element and an example bypass coding of (e.g., some of) bins of the syntax element.

Features described herein may be associated with transform coefficient coding/decoding. The quantized coefficients, included in a transform-block (TB), may be entropy coded and decoded.

The transform coefficient coding may include the following: a coded block indication may indicate whether a transform block includes any nonzero levels; for blocks with CBF equal to 1, the x and y coordinate of the last nonzero level in forward scan order may be transmitted; a transform block may be divided into sub-blocks of quantized coefficients called Coding Groups (CG) or coefficient groups, which size depends on the transform block size.

Starting from the indicated last position, the levels (e.g., magnitude) may be transmitted in reverse scan order coefficient groups, CG by CG. The bins for a CG may be coded in multiple passes, where the bypass-coded bins are grouped together (e.g., in order to enable efficiency). The scanning order of transform coefficients may correspond to a zig-zag scanning order in reverse order. Features described herein may include coefficients group determination and scan order and the coding of the last significant coefficient position.

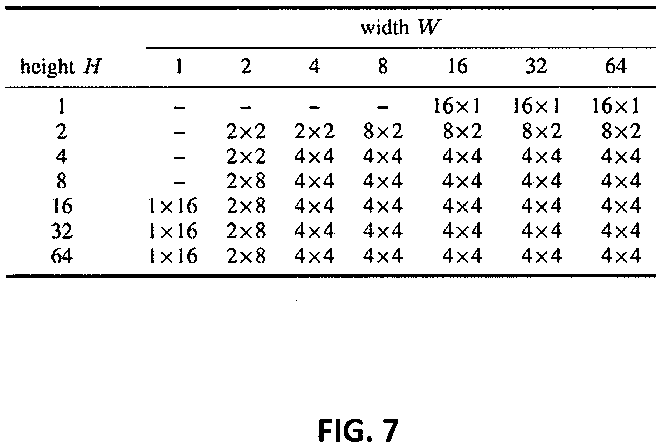

The transform coefficient levels {q} of a W×H transform block may be arranged in a W×H matrix. For enabling a harmonized processing across various block sizes and for increasing coding efficiency for transform blocks, in which the signal energy is concentrated into transform coefficients that correspond to low horizontal or low vertical frequencies, transform blocks may be partitioned into coefficient groups (CGs). The levels for a CG may be coded in a unified manner using multiple scan passes. Block sizes with widths and heights less than 4 may be supported, and the shape of CGs depends on the transform block size as shown in FIG. 7.

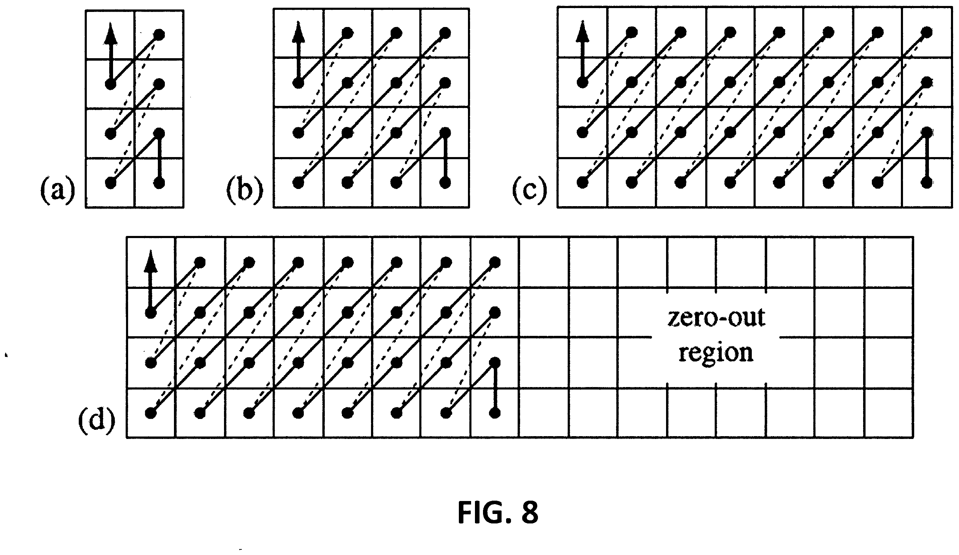

FIG. 7 illustrates example coefficient group sizes for WxH transform blocks. For transform blocks with at least 16 coefficients, the CGs may include 16 levels; for smaller blocks, CGs of 2×2 levels may be used. The coding order of CGs may be given by the reverse diagonal scan illustrated in FIG. 8

FIG. 8 illustrates an example of a reverse diagonal scan, including a coding order of coding groups in (a) 8×16 blocks, (b) 16×16 blocks (e.g., the coding order of levels in 4×4 CGs), (c) 32×16 blocks, and (d) 64×16 blocks.

Independent of the CG size, the CG diagonals may be processed from the bottom right to the top left of a transform block, where a diagonal is scanned in down left direction. The coding order of levels inside CGs may be specified by the same reverse diagonal scan.

For limiting the worst-case decoder complexity for large transform sizes, transform coefficients at high-frequency locations may be forced to be equal to zero. Nonzero quantization indexes may be present in a min(W,Wn)×min(H, Hn) region at the top-left of a transform block, where Wn×Hn denotes the size of the non-zero-out area that can be inferred at the decoder side. CGs outside this region may not be coded and may be excluded from the scan, as illustrated in FIG. 8(d).

In examples, Wn×Hn may be equal to 32×32, which may be the maximum supported size for the non-zero-out area. In examples, there may be smaller non-zero-out areas for transforms other than the DCT-II. The transform coefficient coding may or may not be affected, since the syntax elements specifying the transform used may be coded after the levels and the syntax elements may be conditioned on the presence of nonzero levels in certain regions.

The luma blocks, with *max*(*W*,*H*) ≤ 32, may be coded in a subblock transform mode. If non-DCT-II transforms are enabled (e.g., on a sequence level), the blocks may be coded using non-DCT-II transforms, and the size of the non-zero-out area may be inferred to be equal to 16×16.

The last significant coefficient position may be indicated in video data (e.g., signaled in the bitstream). The explicit coding of zero quantization indexes for coefficients related to high-frequency components may be eliminated by transmitting the position of the last nonzero level in a forward scan order (e.g., which may be the first nonzero level in coding order). This may increase coding efficiency and reduce the number of context-coded bins. The x and y coordinates corresponding to the column and row number, respectively, in the matrix of coefficient levels may be indicated independently of each other in video data.

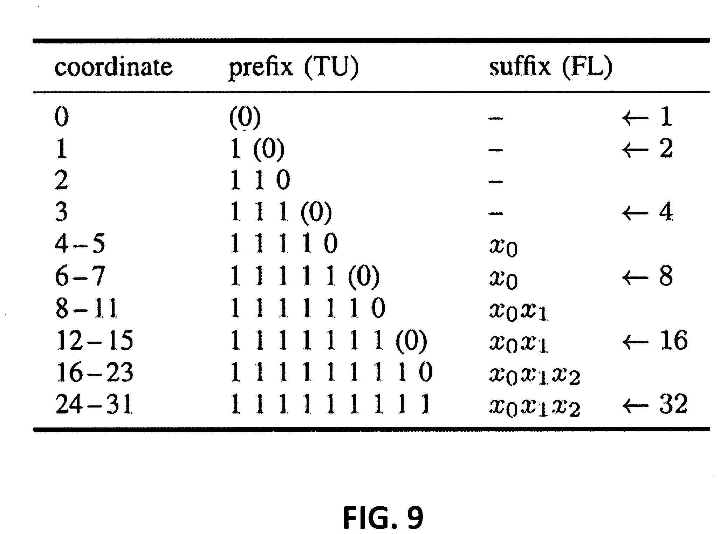

FIG. 9 illustrates an example binarization for coordinates of a last significant coefficient position. As shown in FIG. 9, a component may be represented by a combination of a prefix codeword and a (e.g., empty) suffix codeword.

The prefix part may specify an interval of values. It may be binarized using truncated unary (TU) binarization, and the bins may be coded in regular mode. The prefix part indicating the last interval of the non-zero-out region of a transform block may be truncated. The zero bins in parenthesis shown in FIG. 9 may not be coded if min(W,Wn ), for the x coordinate, or min(H, Hn), for the y coordinate, are equal to the number in the last table column. The coding of a coordinate may be completely skipped if the corresponding block width or height is equal to 1. The suffix part may represent the offset inside the interval indicated by the prefix part. The suffix part may be binarized using fixed length (FL) binarization and coded in bypass mode. X and y coordinates with values greater than 3 may have a suffix part.

At the decoder side, the values of the x and y coordinates of the last significant level may be derived as follows. Let *vₚᵣₑ* be the number of bins equal to 1 in the prefix codeword. The number *n_{suf}* of suffix bins to be decoded may be derived by: ${n}_{suf} = max \left(0,⌊ \frac{{v}_{pre}}{2} ⌋-1\right)$

With *v_{suf}* being the value specified by the suffix codeword (e.g., in binary representation), the decoded coordinate value last may be calculated according to $last = { \begin{matrix}{2}^{{n}_{suf}} \times \left(2+\left({v}_{pre}&1\right)\right) + {v}_{suf} , {n}_{suf} > 0 \\ {v}_{pre} otherwise\end{matrix}$

The prefix part for the x coordinate may be signaled followed by the prefix part for the y coordinate. For grouping bypass-coded bins, the suffix parts may be coded after the prefix codewords. The prefix bins of the x and y coordinates may be coded using separate sets of context models.

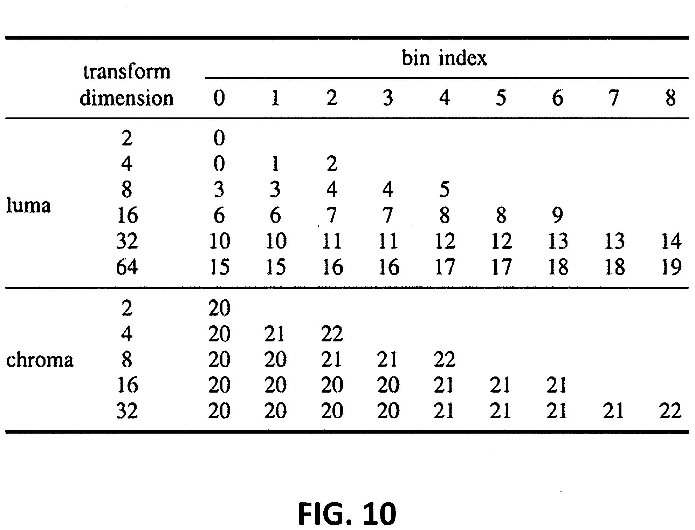

FIG. 10 illustrates an example of CABAC context indices for prefix bins of last significant coefficient position coding. FIG. 10 lists example CABAC context offsets that indicate the probability model used inside a set. The model chosen may depend on whether a luma or chroma block is coded, the width or height of the transform block, and the bin number inside the prefix codeword. For large transform blocks, where zero-out is present, the transform dimension may be used to derive the context offset. In total, 46 contexts (40 for luma and 6 for chroma) may be used for coding the last coefficient position.

The last significant coefficient coordinates may be encoded and decoded. The last significant coefficient x- and y-coordinates may respectively encode an index to an interval (prefix) and an offset within the signaled interval (suffix), useful to reconstruct the exact x or y coordinate value. The prefix may be context-based arithmetic coded, and the suffix may be coded in bypass mode.

The number of intervals is *N* + 1, where *N* = log₂(*T*) - 1, where *T* is the transform size. The interval index may be coded via the prefix, through the truncated unary code, illustrated by FIG. 13, in case *7* = 32. The suffix may be fixed-length coded over *b* bits, $b = max \left(0,⌊ prefix / 2 ⌋-1\right)$. The maximum length of the truncated unary code (e.g., the number of context-based coded bins) for one coordinate may be 3, 5, 7, and 9 for transform sizes of 4, 8, 16, and 32, respectively.

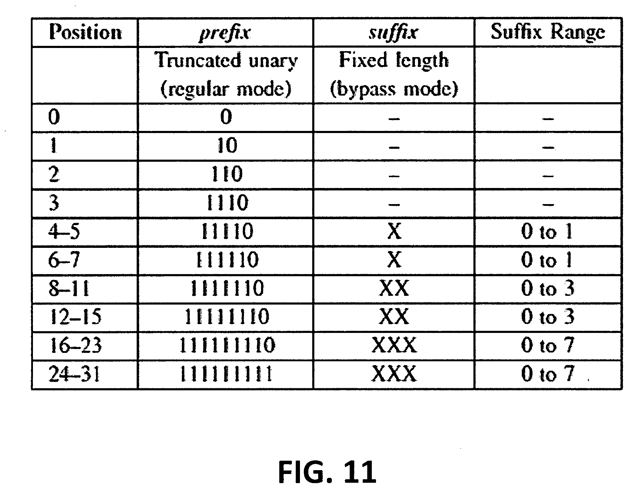

FIG. 11 illustrates an example binarization of the last significant coefficient coordinate syntax elements. Features described herein may be associated with transform coefficient coding. CTU size and maximum transform size (e.g., MTS transform kernels) may be modified (e.g., extended) to 256, where the maximum intra coded block may have a size of 128×128. The maximum CTU size may be set to 256 for UHD sequences and to 128 (e.g., 128, otherwise). In the primary transformation process, there may or may not be a normative zeroing out operation applied on transform coefficients. If low frequence non-sparable transform (LFNST) is applied, the primary transform coefficients outside the LFNST region may be normatively zeroed-out.

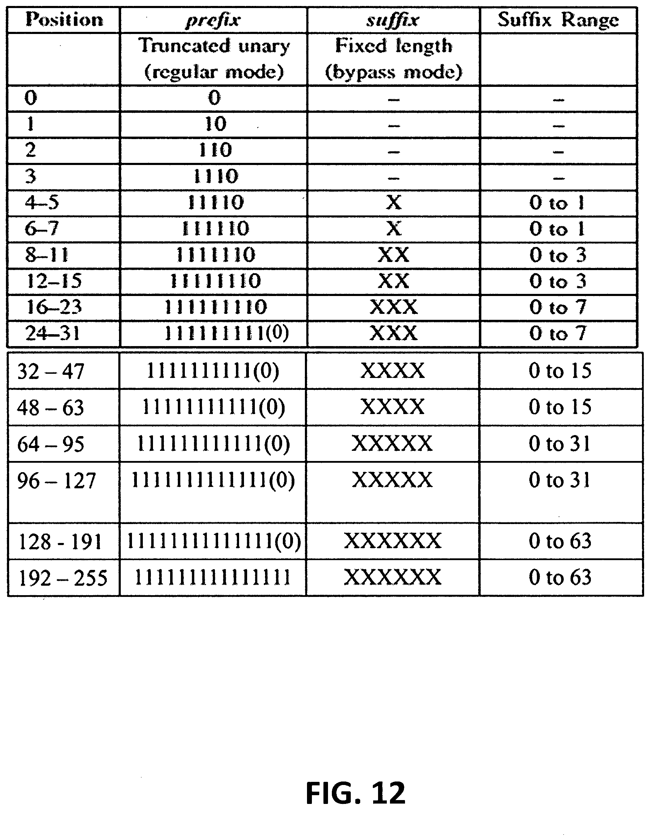

FIG. 12 illustrates an example binarization of a prefix and a suffix of last significant position syntax elements. The binarization of a prefix and a suffix part for the entropy coding of a last significant coefficient coordinates may be extended as shown by FIG. 12. The codeword of suffixes may get significantly longer for large transform blocks, coupled with the removal of zero-out mechanism for the primary transform stage. A high rate cost may be associated with coding a large value of last significant coefficient position in an X or Y coordinate.

The syntax element used to signal the X and Y coordinates of the last significant coefficient in a transform block may be noted lastSigPosX and lastSigPosY herein. When designating either lastSigPosX or lastSigPosY, notation LastSigPosX/Y may also be used herein.

The following syntax elements may be used to designate the prefix and suffix, respectively of lastSigPosX and lastSigPoxY elements: last sig coeff x_prefix; last_sig_coeff_x_suffix; last_sig_coeff_y_prefix; and/or last sig coeff_y_suffix. The notations may be used in the following, in alternance with notation lastSigPosX, lastSigPosY and lastSigPosX/Y.

With respect to the binarization of lastSigPosX and lastSigPosY syntax elements, the prefix part may be adapted to the coding of random variables with a statistical distribution where the occurrence probability of a given value decreases significantly as the value increases, such as a Laplacian distribution.

FIG. 13 illustrates an example distribution of last significant position X values on sequence BQTerrace QP 27. The distribution of last signification X may be far from a Laplacian distribution. Some high values of the syntax element may occur more often than others. This phenomenon may happen for transform block sizes, e.g. from 32 to 128.

The binarization of the suffix part of the last signification X and Y position coding may be included in a Fixed-Length-Coding (FLC), which may be a unary binary representation of a positive integer value included in a pre-fixed interval. The length of the fixed-length binarization of the suffix may depend on the prefix value. The fixed-length binarized suffix may be coded in bypass mode, e.g., a bin may costs one bit. Such fixed-length representation of values may be adapted to coding a uniformly distributed random variables.

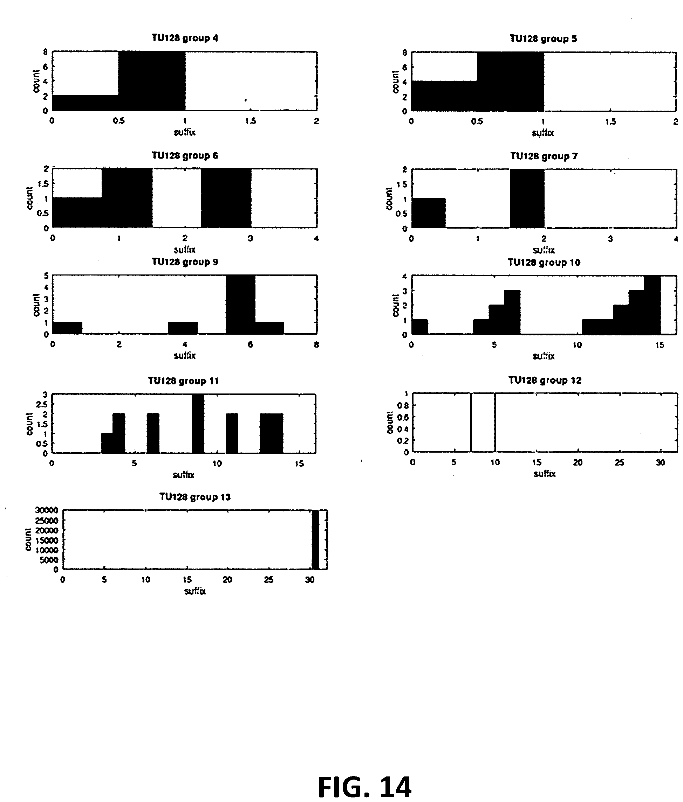

FIG. 14 illustrates an example of a distribution of suffix values for a prefix value, for transform block size 128. FIG. 14 illustrates histograms of a last significant X position suffix value obtained on a video sequence, for a given large transform block size (128) and for an interval of lastSigPosX specified by its prefix. The distribution of a last signification X may be far from a uniform distribution. Some values of the syntax element may occur more often than others. This distribution may happen for large TU sizes, e.g. from 32 to 128., especially 64 and 128.

The compression efficiency may be increased. The efficiency of the coding of the last significant transform coefficient position in a transform block may be increased when coding/decoding the residual block associated to a transform block.

The binarization and entropy coding of the last significant coefficient position may be performed to adapt where the statistical behavior of the last Significant X and/or Y position value has a singular behavior.

The term transform block may stand for the whole block for which transform coefficients are being signaled or the non-zero-out part of the transform block, in cases where zeroing out of transform coefficients are applied, e.g. when a secondary transform is applied in a considered block.

A secondary prefix indication may be included in video data (e.g., signaled) for block sizes and prefix values. A secondary prefix of the lastSigPosX/Y syntax may indicate that a binarization and coding of the lastSigPosX/Y syntax element is employed in the considered transform block. The secondary prefix may be included in an indication indicating that the lastSigPosX/Y value takes the maximum value allowed for the considered transform block size.

The secondary prefix indication may be context-based arithmetically coded. In some examples, the secondary prefix indication may be signaled for transform block sizes, e.g. 64 and 128, or 32, 64 and 128. For example, the secondary prefix indication may be signaled before the prefix part of the lastSigPosX/Y syntax element. If the secondary prefix indication indicates that the lastSigPosX/Y value is to be determined based on the transform block size, a prefix and/or suffix may not be signaled for the considered transform unit. The lastSigPosX/Y value may be determined based on the transform block size (e.g., the maximum value allowed for the considered transform block size). If the indication indicates that lastSigPosX/Y value is not to be determined based on the transform block size, a prefix and a suffix may be signaled for the considered transform unit. ThelastSigPos value may be signaled in video data. Based on the lastSigPos value being different from the maximum value allowed for the considered transform block size, the prefix and the suffix may be signaled. For example, the lastSigPos may not be signaled. This may take the form of inferring the least significant bit of the suffix part to 0 and not signaling it, in the case (e.g., other) suffix's bits are set to 1.

The indication may be signaled after the prefix part of the LastSigPosX/Y syntax element. The secondary prefix indication may be associated with a signaled prefix corresponding to the highest allowed value for the considered transform block.

If the secondary prefix indication indicates that the lastSigPosX/Y value is to be determined based on the transform block size, a prefix and/or suffix may not be signaled for the considered transform unit. If the secondary prefix indication indicates that lastSigPosX/Y value is not to be determined based on the transform block size, a suffix may be signaled for the considered transform unit. The lastSigPos value may be signaled in video data. Based on the lastSigPos value being different from the maximum value allowed for the considered transform block size, the suffix may be signaled. For example, the lastSigPos may not be signaled. This may take the form of inferring the least significant bit of the suffix part to 1 and not signaling the least significant bit. In examples, a low (e.g., lower) cost may be associated with bypassing the transmission of suffix bits).

The proposed secondary prefix for lastSigPosX/Y binarization may be included in an indication that indicates if the considered lastSigPosX/Y value is coded in flipped mode or not. If true, the value (Width-LastSigPosX/Y) may be signaled rather than value LastSigPosX/Y itself.

The indication indicating if the considered lastSigPosX/Y value is coded in flipped mode or not may be coded before the prefix. Separated CABAC context models may be used to code the bins of the prefix, according to whether the flip indication is equal to true or false. The indication may be coded after the prefix and before the suffix.

The indication may be signaled for small values of the prefix. If the prefix indicates a range of lastSigPos values that are sufficiently lower than the half of the considered transform block size, the proposed flip indication may be signaled. The proposed flip indication may be inferred to be false (e.g., if the prefix does not indicate a range of lastSigPos values that are sufficiently lower than the half of the considered transform block size).

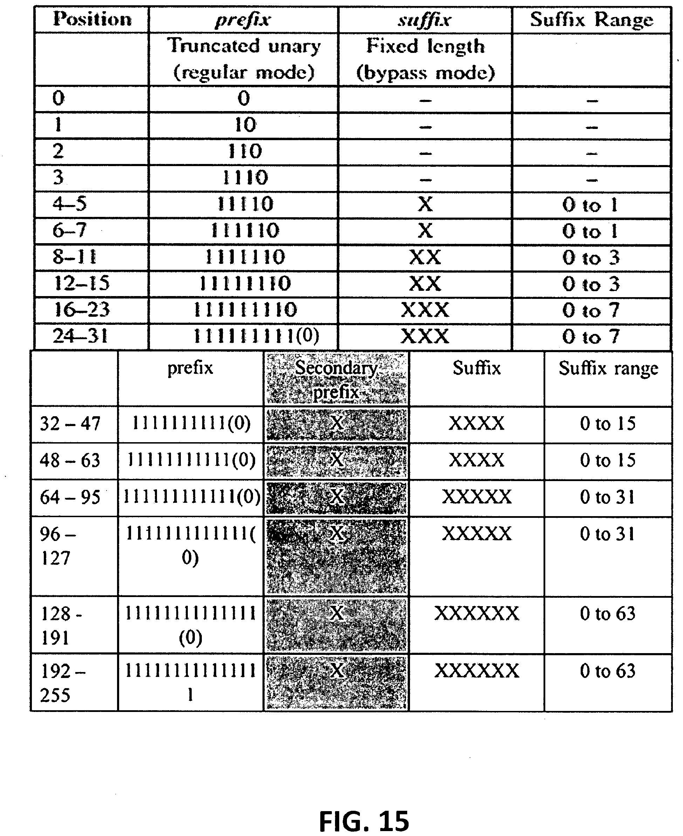

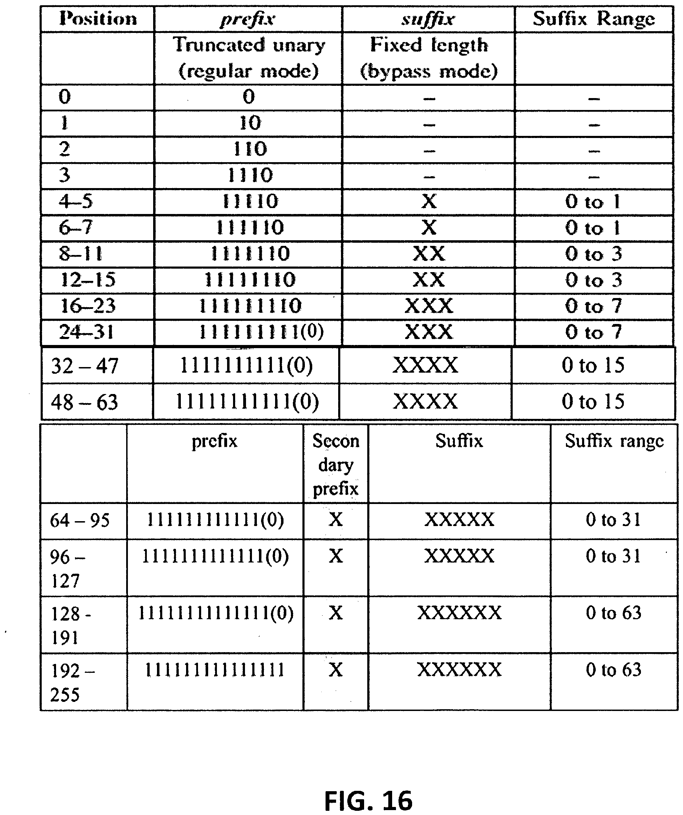

FIG. 15 illustrates an example for a modified binarization of LastSigPosX/Y syntax element. FIG. 16 illustrates an example for a modified binarization of LastSigPosX/Y syntax element. The introduction of a secondary prefix indication as proposed in above characteristics is illustrated by FIG. 15 and FIG. 16.

The secondary prefix indication may indicate that the lastSigPosX/Y value takes the maximum value allowed in the interval of suffix values associated to the value of signaled prefix. The last significant position value chosen by the encoder may be the highest value of a group, e.g., a range of suffix values associated to a given prefix. The reason for such statistical distribution may be that the rate cost associated with the suffix may be the same whatever its value inside a given range. Allowing non-zero transform coefficients in the full range may lead to a decrease in distortion with a zero rate cost increase, compared to forcing zero coefficients down to a position lower than the maximum value in the considered suffix range. This may provide the encoder rate distortion optimization process with a rate-distortion trade-off.

The secondary prefix may be applied to lastSigPosX and/or LastSigPosY (e.g., the secondary prefix may be used for the coding of lastSigPosX and/or LastSigPosY). The statistical behavior of the two variables may be different, and their entropy may be modelled differently. The last significant X/Y position (e.g., the change in the last significant X/Y position) may be used for the coding of lastSigPosX/Y.

The entropy coding of lastSigPosX and the entropy coding of lastSigPosY may be performed differently from each other. One of the characteristics described herein may be applied to the coding of lastSigPosX, and a characteristic described herein may be used for lastSigPosY.

The usage of an entropy coding of lastSigPosX and/or lastSigPosY for a given picture may be signaled by means of some high level signaling, e.g. in the picture header, slice header, tile header, tile group header, slice group header, Picture Parameter Set, Adaptive Parameter Set, Sequence Parameter Set, etc.

Features described herein may be associated with context modelling for suffix bins coding. To avoid the risk that the rate cost of bypass-coded suffix part of the lastSigPosX/Y syntax element may be binarized with the fixed length binarization, its bins may be context-based coded with context models.

A (e.g., each) bit of the binarized suffix value, e.g., a bin, may be CABAC encoded using a (e.g., a separate) context. Contexts may be different per component type, LUMA and Chroma coefficients. Contexts may be different per TU size and/or suffix range sizes. Contexts may be different per prefix value, which may identify which range of a last position value is being signaled. A bin may be CABAC encoded using a context model that is dependent of the history of precedent bins. A first bin of the suffix value may use a single CABAC context. A second bin may use a (e.g., one) CABAC context chosen among 2 possible contexts. The choice may be made according to the value of preceding bin. A third bin may use a CABAC context chosen among 4 contexts, based on the values taken on the two preceding bins. An n-th bin may use a CABAC context among 2^{*n*-1} context based on values taken by preceding bins in the codeword. The context index may be equal to the integer corresponding to a unary representation of first n-1 bins: ${context}_{id} = {\sum }_{i = 0}^{n - 1} bin \left(i\right) {.2}^{i}$

Rate cost of bins having a low entropy may be reduced. The cost of bins may be the same value, for example, of the TU size 128 in FIG. 14. Compared to a CABAC coding of a bin with a single context, for example, given the fixed-length binarization process, the semantic of a suffix's bin may be different for different values of preceding bins. Using a single context for each bin may make the CABAC coding mixing different types of information in the same bin.

Features described herein may be associated with a modified suffix binarization and context-based coding of suffix bins. The binarization of the suffix part of syntax element LastSigPosX/Y may be performed as follows.

The suffix coding may follow a binary tree coding to specify in which sub-range of the whole suffix range the input suffix value to signal is located. When a sub-range of size lower or equal to a pre-defined threshold value is reached, a fixed-length coding of the remaining value may be coded. A minimum sub-range length may be 1, e.g., no fixed-length remaining value may be needed.

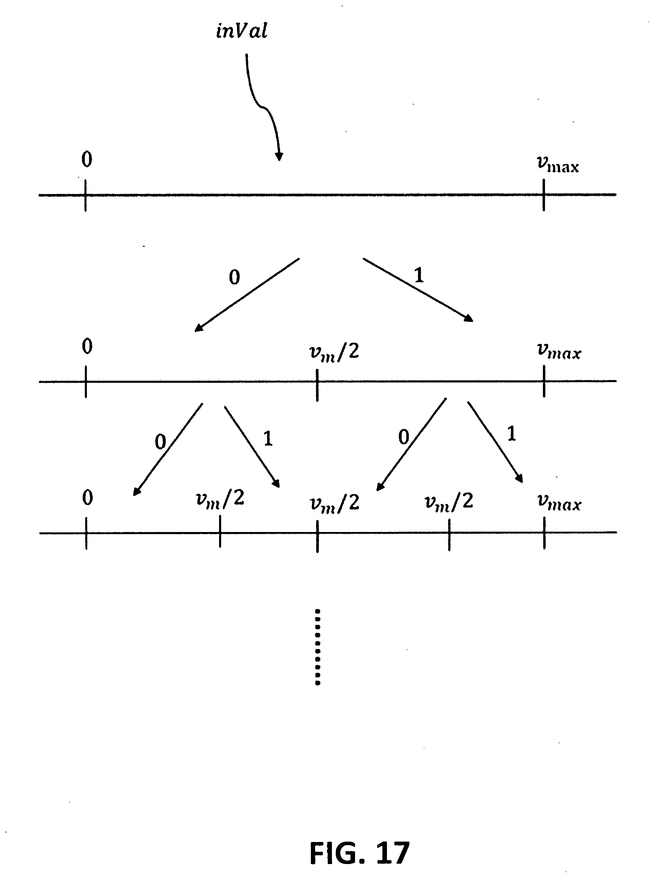

FIG. 17 illustrates an example diagram of CABAC-based dyadic signaling of a suffix value down to a pre-fixed reduced interval. The process may be illustrated by FIG. 17. Input value is noted inVal, the whole suffix range length is noted rangeLength, the minimum sub-range length is noted subRangeLength.

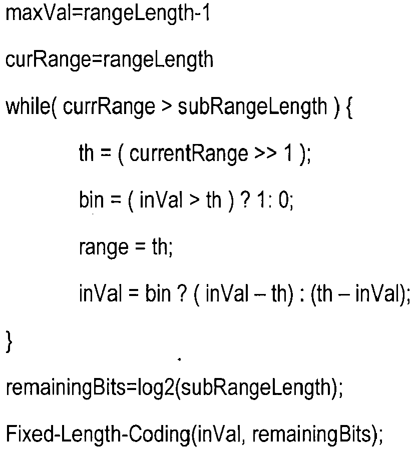

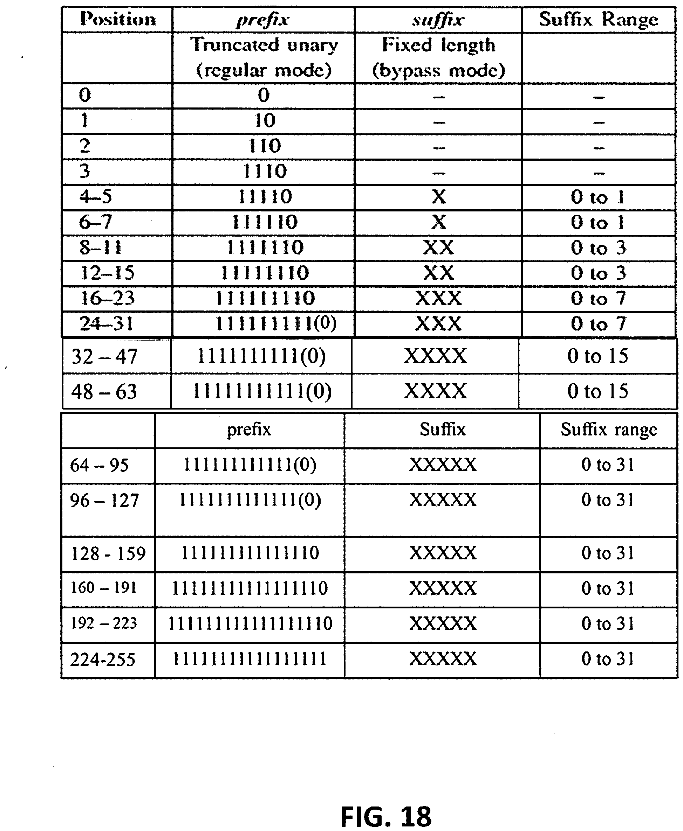

A modified prefix specification may target ranges (e.g., finer ranges) of suffix values. The binarization process of the LastSigPosX/Y may be performed as follows. The suffix interval range indicated by the prefix may be reduced for a larger value of the last significant positions values, in order to enable the suffix part to involve a reduced number of bypass coded bins. This may take the form of any of FIGS. 18-20. FIGS. 18-20 show example cases where the interval of last significant position values addressed by each suffix may be reduced.

FIG. 18 illustrates an example of reducing a suffix range for a TU size (e.g., 256). In FIG. 18, suffix ranges for last position values between 128 and 255 may be reduced. This may concern transform blocks with size 256, and the rate cost of the concerned suffix for such transform block sizes may be reduced.

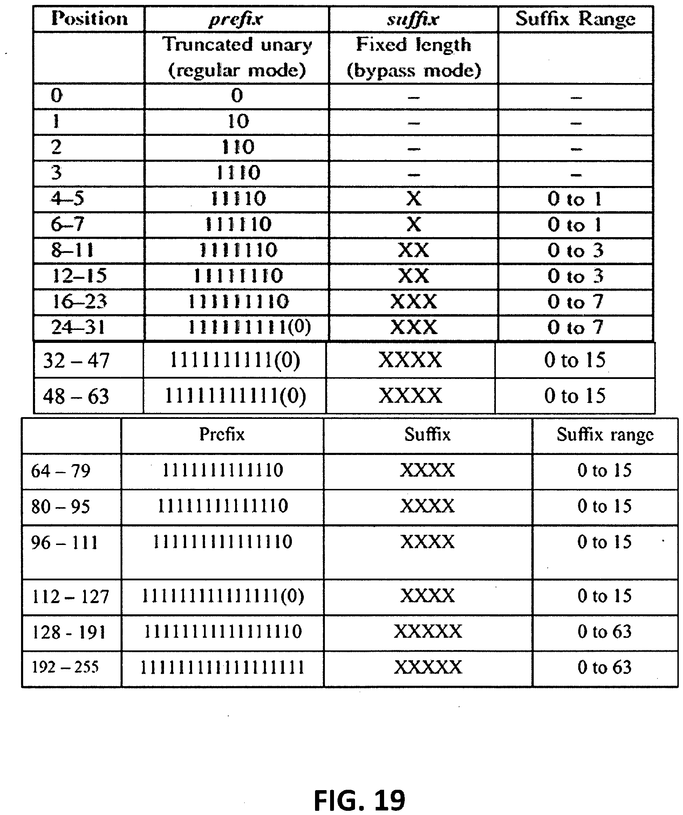

FIG. 19 illustrates reducing suffix range for a suffix range or 64-127, which may concern TU sizes 64 and 128. On FIG. 19, suffix ranges for last position values between 64 and 127 may be reduced. This may concern transform blocks with size 128 and transform blocks with size 256 in width or height, and the rate cost of the concerned suffix for such transform block sizes may be reduced.

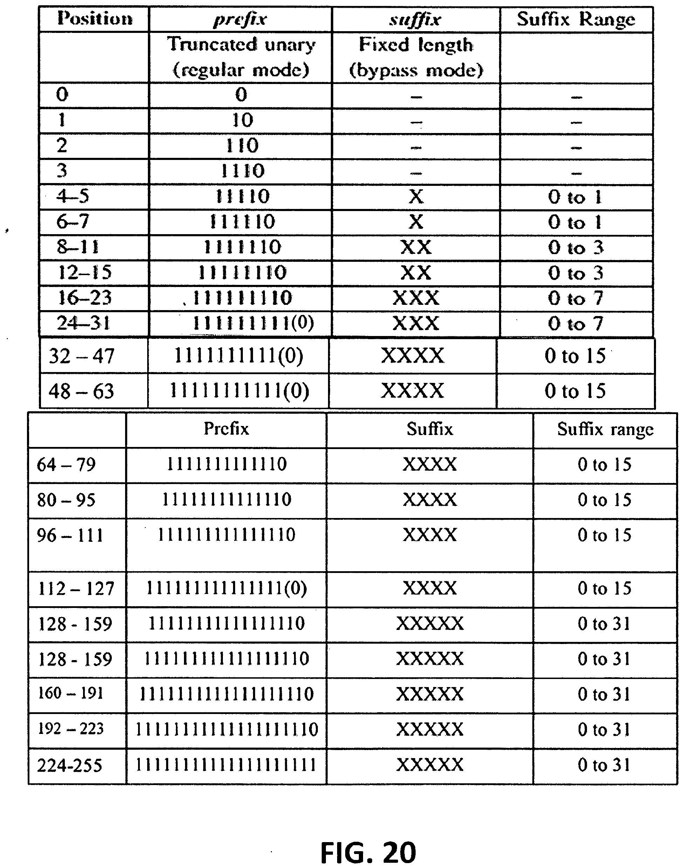

FIG. 20 illustrates an example for reducing the suffix range for a last significant position value between 64 and 255. In FIG. 20, the binarization may be changed such that suffix ranges for last position values are between 64 and 255 are reduced. This may concern transform blocks with size 128 and transform blocks with size 256 in width or height, the rate cost of the concerned suffix for such transform block sizes may be reduced.

Although features and elements are described above in particular combinations, one of ordinary skill in the art will appreciate that each feature or element can be used alone or in any combination with the other features and elements. In addition, the methods described herein can be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software can be used to implement a radio frequency transceiver for use in a WTRU, UE, terminal, base station, RNC, or any host computer.

## Claims

1. A method for video decoding, the method comprising:
receiving a secondary prefix indication indicating a binarization and coding method for a last significant position syntax element configured to indicate a last significant position in a transform block;
determining the binarization and coding method for the last significant position syntax element associated with the transform block; and
decoding the last significant position syntax element based on the determined binarization and coding method.

2. The method of claim 1, wherein the secondary prefix indication is configured to indicate whether the last significant position syntax element is associated with a size of the transform block, and the method further comprises:
based on the secondary prefix indication indicating that the last significant position syntax element is associated with the size of the transform block, determining that signaling of the last significant position syntax element for the transform block is bypassed;
determining the size of the transform block; and
inferring the last significant position in the transform block based on the size of the transform block.

3. The method of claim 1, wherein the secondary prefix indication indicates whether the last significant position syntax element is associated with a size of the transform block, and the method further comprises:
based on the secondary prefix indication indicating that the last significant position syntax element is not associated with the size of the transform block, determining that a prefix and a suffix associated with the last significant position in the transform block are signaled in video data; and
determining the last significant position in the transform block based on the prefix and the suffix.

4. The method of claim 1, wherein the secondary prefix indication is context-based arithmetically (CABAC) coded.

5. The method of claims 1 to 4, wherein the secondary prefix indication indicates whether the last significant position syntax element is associated with a width value of the transform block, and the method further comprises:
based on the last significant position syntax element indicating that the last significant position syntax element is associated with the width value of the transform block, determining that the last significant position relative to the width value of the transform block is signaled in video data; and
determining the last significant position in the transform block based on the width value and the last significant position syntax element.

6. The method of claim 5, wherein the secondary prefix indication indicates whether a range of values associated with the last significant position is below a threshold, and the method further comprises:
based on the secondary prefix indication indicating that the range of values associated with the last significant position is below the threshold, determining that the last significant position relative to the width value of the transform block is signaled in video data; and
determining the last significant position in the transform block based on the range of values associated with the last significant position.

7. The method of claim 5, wherein the secondary prefix indication indicates whether a range of values associated with the last significant position is below a threshold, and the method further comprises:
based on the secondary prefix indication indicating that the range of values associated with the last significant position is above the threshold, determining that signaling of the last significant position relative to the width value of the transform block is bypassed; and
determining the last significant position in the transform block based on the width value and the last significant position syntax element.

8. A method for video encoding, the method comprising:
determining a binarization and coding method for a last significant position syntax element associated with a transform block;
based on the determination, including in video data a secondary prefix indication indicating the binarization and coding method for the last significant position syntax element configured to indicate a last significant position in the transform block; and
encoding the last significant position syntax element based on the determined binarization and coding method.

9. The method of claim 8, wherein the secondary prefix indication is configured to indicate whether the last significant position syntax element is associated with a size of the transform block, and the method further comprises:
determining the size of the transform block;
inferring the last significant position in the transform block based on the size of the transform block;
based on the inference, determining that the last significant position syntax element indicates that the last significant position syntax element is associated with the size of the transform block; and
based on the secondary prefix indication indicating that the last significant position syntax element is associated with the size of the transform block, determining to bypass signaling of the last significant position syntax element for the transform block.

10. The method of claim 8, wherein the secondary prefix indication indicates whether the last significant position syntax element is associated with a size of the transform block, and the method further comprises:
determining the last significant position in the transform block based on a prefix and a suffix;
determining that the last significant position syntax element indicates that the last significant position syntax element is not associated with the size of the transform block; and
based on the secondary prefix indication indicating that the last significant position syntax element is not associated with the size of the transform block, including the prefix and the suffix associated with the last significant position in the transform block in video data.

11. The method of claim 8, wherein the secondary prefix indication is context-based arithmetically (CABAC) coded.

12. The method of claims 8 to 11, wherein the secondary prefix indication indicates whether the last significant position syntax element is associated with a width value of the transform block, and the method further comprises:
determining a last significant position in the transform block based on the width value and the last significant position syntax element;
determining that the last significant position syntax element indicates that the last significant position syntax element is associated with the width value of the transform block; and
including the last significant position relative to the width value of the transform block in video data.

13. The method of claim 12, wherein the secondary prefix indication indicates whether a range of values associated with the last significant position is below a threshold, and the method further comprises:
determining the last significant position in the transform block based on the range of values associated with the last significant position;
determining that the secondary prefix indication indicates that the range of values associated with the last significant position is below the threshold; and
including the last significant position relative to the width value of the transform block in video data.

14. The method of claim 12, wherein the secondary prefix indication indicates whether a range of values associated with the last significant position is below a threshold, and the method further comprises:
determining the last significant position in the transform block based on the width value and the last significant position syntax element; and
determining that the secondary prefix indication indicates that the range of values associated with the last significant position is above the threshold; and
determining to bypass signaling of the last significant position relative to the width value of the transform block.

15. Video data comprising information representative of encoded output generated according to one of the methods of any of claims 8 to 14.
